Europäisches Patentamt

European Patent Office

Office européen des brevets

(19)

(11) **EP 0 937 401 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(51) Int Cl.⁷: $A21D\ 2/38$, A21D 6/00, A23L 1/185

(21) Anmeldenummer: **99102927.3**

(22) Anmeldetag: **13.02.1999**

(54) **Verfahren zur Herstellung eines Haushaltsmehls mit verbesserten Backeigenschaften**

Process of preparation of household flour with improved baking qualities

Procédé pour la préparation d'une farine de ménage aux qualités de cuisson améliorées

(84) Benannte Vertragsstaaten:
**DE DK FR IT**

(30) Priorität: **24.02.1998 DE 19807746**

(43) Veröffentlichungstag der Anmeldung:
**25.08.1999 Patentblatt 1999/34**

(73) Patentinhaber: **Jodlbauer, Heinz D. Dr.**
**30161 Hannover (DE)**

(72) Erfinder: **Jodlbauer, Heinz D. Dr.**
**30161 Hannover (DE)**

(74) Vertreter: **Patentanwälte**
**Hauck, Graalfs, Wehnert, Döring, Siemons, Schildberg**
**Neuer Wall 41**
**20354 Hamburg (DE)**

(56) Entgegenhaltungen:
DE-A- 3 134 228  DE-A- 3 922 395
FR-A- 2 598 061  US-A- 3 897 569
US-A- 4 821 455

## Beschreibung

Die Erfindung bezieht sich auf ein Verfahren zur Herstellung eines Haushaltsmehls mit verbesserten Backeigenschaften nach dem Oberbegriff des Anspruchs 1 bis 4.

Betrachtet man das von der Hausfrau hergestellte Spektrum an Backwaren, so fällt auf, daß zum überwiegenden Anteil nur Kuchen, wie beispielsweise Sandkuchen und englischer Kuchen sowie Mürbeteig hergestellt wird. Der Anteil an hefegetriebenen Teigen ist relativ gering. Die Ursache liegt in der nicht ausreichenden Gelingsicherheit für die Hausfrau. Bei Kuchen wird beispielsweise Backpulver - ein chemisches Triebmittel - mit hoher Gelingsicherheit eingesetzt. Bei hefegetriebenen Teigen produziert die Hefe Alkohol und $CO_2$ zur Lockerung der Teige, wobei die Hausfrau wesentlich weniger Gelingsicherheit hat, da die Backerfahrung der älteren Hausfrauengenerationen nicht im ausreichenden Maße auf die jüngeren Generationen übertragen wurden. Deshalb gelingen die Hefeteige wesentlich weniger als die Kuchen- oder Mürbeteige. Im Laufe der Jahrzehnte baute sich eine entsprechende Hemmschwelle auf. Als Alternative werden Kuchen- und Hefeteigfertigmischungen angeboten.

Durch Verbesserung im Müllereibereich durch Verwendung von kleberstärkerem Weizen bzw. durch spezielle Mahlpassagen wurde eine Verbesserung versucht herbeizuführen. Durchgreifender Erfolg war nicht beschieden. Unterschiedliche Erntequalitäten bei den verwendeten Weizensorten wirken sich zusätzlich auf die Gleichmäßigkeit der Qualität der Hausfrauenmehle aus. Das Niveau der sogenannten Gärtoleranz bleibt mittel bis niedrig.

FR 2598061 betrifft ein Verfahren zur Herstellung von Teigen enthaltend geröstetem Getreidemalz und Mehle, die zum Backen von Brot geeignet sind.

DE 3134228 beschreibt ein Verfahren zur Verbesserung der ernährungsphysiologischen Qualität und der Backfähigkeit von Brotgetreide, das zu Vollkornmehl oder Vollkornschrot verarbeitet werden soll. Im Verlaufe dieses Verfahrens werden verschiedener korneigener Enzyme aktiviert.

Der Erfindung liegt die Aufgabe zugrunde, ein Verfahren zur Herstellung eines Haushaltsmehls mit verbesserten Backeigenschaften anzugeben, das sich durch Gelingsicherheit auszeichnet.

Diese Aufgabe wird durch die Merkmale der Patentansprüche 1 und 2 gelöst.

Erfindungswesentlich ist, daß dem herkömmlichen Weizen bzw. Weizenmehl, zum Beispiel der Type 405, ein Anteil Weizen bzw. Weizenmehl mit Enzymprofil zugemischt wird. Hierbei wird von der Kenntnis ausgegangen, daß es möglich ist, den Keimling des Weizens, insbesondere das Schildchen, zusammen mit dem sich vergrößernden Aufsaugepithel als chemischen Reaktor zu verwenden, indem eine Aktivierung durch eine bestimmte Substanz erfolgt. Diese Substanz ist geeignet, Biomembranen relativ leicht und rasch zu durchdringen. Zu diesen gehören Liposome oder Niosome. Der Weizen wird wie bei einem herkömmlichen Mälzprozeß einem Weichund Keimvorgang in wäßriger Umgebung ausgesetzt. Der wäßrigen Umgebung wird die die Biomembran durchwandernde Substanz zugesetzt, welche zum einen zu einer erhöhten Aktivierung der sameneigenen Gibberelline führt und andererseits wird das sameneigene Leitungsnetz benutzt, d.h. es findet ein verstärkter Transport von Gibberellinen zur Aleuronschicht und ein Rücktransport von Reservestoffen aus dem Mehlkörper zum Keimling statt. Es kommt zur Neubildung von Enzymen bzw. Enzymkomplexen bzw. zur Anreicherung bestimmter Enzyme, wie beispielsweise Alpha-Amylase, Lipoxigenase usw. Gleichzeitig kann bei dem beschriebenen Vorgang auch eine Unterdrückung von bestimmten Enzymen und Enzymkomplexen stattfinden. Liposome können zum Beispiel aus Lecithinen oder Leeithinfraktionen hergestellt werden, beispielsweise aus einem Lecithin, das vorwiegend Phosphatidylcholin (PC) enthält oder aus einer Lecithinfraktion aus Phosphatidylethanolamin und Phosphatidylinositol (PE bzw. PI). Werden Niosome eingesetzt, kann hierfür ein Alkylpolyglycerinether zusammen mit Cholesterin und Diacetylphosphat als Niosombildner verwendet werden oder ein Glycero-lactyl-palmitat. Die Vesikel der verwendeten Liposome oder Niosome liegen im Größenordnungsbereich von 10 bis 3000 nm, vorzugsweise zwischen 50 und 200 nm.

Die Liposome oder Niosome können unbeladen oder auch beladen verwendet werden. Das Beladen ist an sich bekannt. Die Beladung kann mit lipophilen, hydrophoben oder hydrophilen Stoffen stattfinden. Entsprechend findet die Aufnahme in der Hülle oder im Innenraum des Vesikels statt.

Die Behandlungsphase, d.h. das Aussetzen der Sämlinge dem Wasser und der aktivierenden Substanz findet etwa in einem Zeitraum von 1 bis 12 Stunden statt, wobei die Weichphase 1 bis 6 Stunden und die Keimphase 2 bis 10 Tage stattfindet, vorzugsweise 3 bis 4 Tage. Die in der Keimphase herrschende Temperatur wird vorzugsweise gesteuert. Vorzugsweise findet eine Kühlung statt wegen der bei der Keimung entstehenden Wärme. Nach einer vorgegebenen Dauer, welche die Anreicherung an Enzymen bestimmt, wird die Keimphase unterbrochen. Hierzu kann ein Schockgefrieren angewendet werden. Nach der Beendigung der Keimphase wird das Keimgut getrocknet, wobei vorzugsweise ein Gefriertrocknen verwendet wird. Das getrocknete Gut, d.h. das Grünmalz hat nach dem Trocknen einen Wassergehalt von 0,5 bis 15%, vorzugsweise von 6%.

Im Anschluß wird das Keimgut gemahlen und kann während des Mahlens in eine enzymreiche und proteinreiche Fraktion und eine proteinarme und enzymarme Fraktion separiert. Dies geschieht zum Beispiel durch das bekannte Windsichtungsverfahren.

Nachstehend wird ein Beispiel für eine Liposomlösung, wie sie zur Behandlung von Weizen eingesetzt werden kann, angegeben:

| | |
|---|---|
| Phospholipidfraktion (mit 40% Phosphatidylcholingehalt) | 5,000 |
| Wasser | 45,000 |
| | 50,000 |

Zur Anwendung wird die Liposomlösung etwa wie folgt verdünnt:

| | kg |
|---|---|
| Liposomlösung | 50,000 |
| Wasser | 100,000 |
| | 150,000 |

Eine weitere Verdünnung kann nach dem nachstehenden Beispiel erfolgen:

| | |
|---|---|
| 1. Verdünnungslösung | 150,000 |
| Wasser | 7 500,000 |
| | 7 650,000 |

Bei diesem Beispiel enthält die Endliposomlösung 0,065% Liposom.
Die oben angegebenen Zahlen sind Gew.-%. Dies trifft auch auf die nachstehenden Beispiele zu.
Nachstehend wird ein Beispiel zur Behandlung von Weizen mit der obigen Liposomlösung über eine Dauer von 1 bis 12 Stunden angegeben:

| | kg |
|---|---|
| Weizen | 3,000 |
| Endliposomlösung | 2,250 |
| Gesamteinsatzmenge | 5,250 |
| | |
| ./. nicht aufgenommene Liposomlösung | 1,480 |
| gesamte eingesetzte Liposomlösung | 2,250 |
| | |
| Vom Weizen aufgenommene Liposomlösung | 1,770 |

Weichphase

| Behandlungsdauer zwischen 1 bis 6 Stunden | |
|---|---|
| Weizen + Liposom | 4,770 |
| je nach Weichbedingungen bis zu 1,000 kg Wasser zum Wiederbefeuchten in der Keimphase | 1,000 |
| | 5,770 |

Keimphase

Dauer zwischen 2 bis 10 Tage, vorzugsweise um 3-4 Tage je nach erwünschtem Enzymprofil. Temperaturbereiche zwischen 10 °C bis 25 °C, vorzugsweise zwischen 14 °C bis 15 °C. Keimbedingungen: übliche Keimkästen, aber auch Trommelmalzanlagen können eingesetzt werden.

Kühlphase

Die Kühlphase erstreckt sich über alle 3 Phasen, wobei die erwünschte Leittemperatur zur Erzielung des erwünschten Enzymprofils über die gekühlte Luftmenge gesteuert wird.

Gefrierphase

Sind die erwünschten Enzymprofile im Keimgut erreicht, erfolgt der Einsatz der Gefrierphase zur Unterbrechung der Keimphase bei -10 °C bis -40 °C. vorzugsweise bei -16 °C in Form einer Schockfrostung, um so eine weitere Veränderung des produzierten Enzymprofils zu verhindern.

Trocknungsphase

Der Gefrierphase schließt sich zur Herstellung von stabilen Trockenprodukten die Trocknungsphase an. Dabei kann, um die Enzymverluste zu vermeiden, nicht die herkömmliche Darretrocknung eingesetzt werden, sondern es wird eine der schonungsvollsten Trockenmethoden, wie beispielsweise die Gefriertrocknung, angewandt, um so die gebildeten Enzyme weitestgehend im Trockengut zu erhalten. Das gefriergetrocknete Produkt wird auf einen Wassergehalt von ca. 6 %. vorzugsweise zwischen 0,5 und 15 % eingestellt.

Es hat sich gezeigt, daß durch die Erhöhung getreideeigener Enzymkonzentrationen bzw. der im Weizen vorhandenen Enzymkomplexe im Weizenmehl die Gärtoleranz wesentlich verbessert werden kann. Darüber hinaus kann bei dem am Markt befindlichen Haushaltsmehl mit Keimen (Handelsmarke "Urkraft des Keimes"), bei dem durch Zusatz von stabilisierten, d.h. aus Haltbarkeitsgründen erhitzten Keimen, auch eine gewisse Volumen- und Gärtoleranzreduzierung aus ernährungsphysiologischen Gründen in Kauf genommen werden müssen, wesentliche Verbesserungen erzielt werden. Diese Verbesserungen betreffen sowohl die Gärtoleranz als auch das Gebäckvolumen.

Wie sich aus den Ansprüchen 1 und 2 ergibt, bestehen grundsätzlich zwei Möglichkeiten zur Herstellung des verbesserten Haushaltsmehls. Die eine gemäß Anspruch 1 geht davon aus, daß "normaler" Weizen vermahlen wird, zum Beispiel zur Vermahlung der Weizenmehltype 405 und zum anderen ein Weizen mit dem Enzymprofil, das in obiger Weise hergestellt wird. Die erhaltenen Mehle werden dann im gewünschten Verhältnis gemischt. Bei der Lehre nach Anspruch 2 wird herkömmlicher Weizen und ein mit Enzymen angereicherter Weizen im gewünschten Verhältnis gemischt und anschließend gemahlen, beispielsweise durch eine sogenannte Passagenmüllerei, wie sie an sich bekannt ist.

Nachstehend werden einige Beispiele angegeben für Weizenmehlmischungen für das erfindungsgemäße Haushaltsmehl sowie für Backergebnisse im Vergleich zu Standardmehlen, und zwar einmal Standardmehl Type 405 und andermal Urkraft des Keimes der Type 405.

Tabelle 1

| 99,5 g Weizenmehl der Type 405 + 0.5 g behandeltes Weizenmehl mit Enzymprofil, nach herkömmlicher Methode gemischt:<br>In 0.5 g behandeltem Weizenmehl sind enthalten. | |
|---|---|
| Alpha-Amylase U/g TrS | Lipoxygenase, pH 9,0 U/g TrS |
| **611** | **3001** |

Beispiel 1

| Backergebnisse als Maßstab der Gärtoleranz über 50 bzw. 70 Minuten Gare | | | | |
|---|---|---|---|---|
| | Standardmehl Type 405 Gare 50 Minuten | Type 405 Gemisch mit Enzymprofil 50 Minuten | Standardmehl Type 405 Gare 70 Minuten | Type 405 Gemisch mit Enzymprofil 70 Minuten |
| Serie A | | | | |
| Mühle 1 | | | | |
| Volumen (ml)<br>Wölbung d. Geb | 875<br>gut | 930<br>gut | 950<br>etwas flach | 1055<br>gut |
| Mühle 2 | | | | |
| Volumen (ml)<br>Wölbung d. Geb | 890<br>gut | 945<br>gut | 1010<br>etwas flach | 1030<br>gut |

Tabelle 2

| 97.5 g Weizenmehl der Type 405 + 2 g hitzestabilisierte Keime - nach herkömmlicher Methode gemischt - aufgemischt mit 0,5 g behandeltem Weizenmehl mit folgen-dem Enzymprofil<br>In 0,5 g behandeltem Weizenmehl sind enthalten: | |
|---|---|
| Alpha-Amylase U/g TrS | Lipoygenase, pH 9,0 U/g TrS |
| 611 | 3001 |

Beispiel 2

| Backergebnis als Maßstab der Gärtoleranz über 50 bzw. 70 Minuten Gare | | | | |
|---|---|---|---|---|
| Serie B | | | | |
| | Urkraft d. Keimes Type 405 | Urkraft d. Keimes Type 405 mit Enzymprofil | Urkraft d. Keimes Type 405 | Urkraft d. Keimes Type 405 mit Enzymprofil |
| | 50 Minuten | 50 Minuten | 70 Minuten | 70 Minuten |
| Mühle 1 | | | | |
| Volumen (ml)<br>Wölbung d. Geb | 850<br>gut | 800<br>gut | 930<br>eingefallen | 1015<br>etwas flach |
| Mühle 2 | | | | |
| Volumen (ml)<br>Wölbung d. Geb | 780<br>gut | 850<br>gut | 880<br>eingefallen | 995<br>etwas flach |

Tabelle 3

| 99,5g Weizenmehl der Type 405 + 0,5g behandeltes Weizenmehl mit Enzymprofil, nach herkömmlicher Methode gemischt In 0,5 g behandeltem Weizenmehl sind enthalten: | | |
|---|---|---|
| Alpha-Amylase Lipoygenase. pH 9.0 Lecithinase C U/g TrS U/g TrS mmol/min/g | | |
| | 305 | 1608 | 29 |

Beispiel 3

| Backergebnis als Maßstab der Gärtoleranz über 50 bzw. 70 Minuten Gare | | | | |
|---|---|---|---|---|
| Serie C | | | | |
| | Standardmehl Type 405 Gare | Type 405 Gemisch mit Enzymprofil | Standardmehl Type 405 Gare | Type 405 Gemisch mit Enzymprofil |
| | 50 Minuten | 50 Minuten | 70 Minuten | 70 Minuten |
| Mühle 1 | | | | |
| Volumen (ml)<br>Wölbung d. Geb | 860<br>gut | 900<br>gut | 990<br>etwas flach | 1010<br>gut |
| Mühle 2 | | | | |
| Volumen (ml) | 855 | 935 | 895 | 1050 |

(fortgesetzt)

| Backergebnis als Maßstab der Gärtoleranz über 50 bzw. 70 Minuten Gare | | | | |
|---|---|---|---|---|
| Serie C | | | | |
| Mühle 2 | | | | |
| Wölbung d. Geb | gut | noch gut | gut | gut |

Die Wölbung des Gebäcks, die abgekürzt "Wölbung d. Geb" bezeichnet ist. dient neben dem Volumen als Maßstab der Stabilität eines Gebäcks in der Gare bzw. in der Übergare. Folgende Formulierungen werden als Skala in der Bewertung verwendet:

gut: gute Gärtoleranz, kein sichtbares Einfallen der Wölbung des Gebäcks.

noch gut: mittlere Gärtoleranz, leicht sichtbares Einfallen der Wölbung des Gebäcks

etwas flach: mittlere bis schwache Gärtoleranz. Wölbung ist flach, es zeigen sich bereits erste Schwächen, d.h. Einfallen der Kruste des Gebäcks. Die küchentechnische Beurteilung der Hausfrau wäre: ..Das Gebäck ist mir leicht eingefallen".

eingefallen: schwache bis ungenügende Gärtoleranz, die Wölbung ist eingefallen, die Kruste des Gebäcks ist - sehr deutlich sichtbar - eingefallen. Die küchentechnische Beurteilung der Hausfrau wäre: Das Gebäck ist mir mißlungen.

Wie zu erkennen, weist das erfindungsgemäße Haushaltsmehl eine verbesserte Gärtoleranz und auch ein verbessertes Gebäckvolumen auf.

**Patentansprüche**

**1.** Verfahren zur Herstellung eines Haushaltsmehls mit verbesserten Backeigenschaften, insbesondere für hefegetriebene Teige, **dadurch gekennzeichnet, daß** dem herkömmlichen Weizenmehl ein gewisser Anteil Mehl mit Enzymprofil zugemischt wird, wobei das Mehl mit Enzymprofil durch folgende Schritte gewonnen wird:

- Weizen wird in wäßriger Umgebung geweicht und keimen gelassen, wobei während dieses Vorgangs eine Biomembranen relativ leicht und rasch durchdringende, den Keimvorgang befördernde Substanz, insbesondere Liposome oder Niosome, zugesetzt wird
- nach der Unterbrechung der Keimphase nach einer vorgegebenen Zeit und dem Trocknen des Weizenmalzes wird dieser vermahlen.

**2.** Verfahren zur Herstellung eines Haushaltsmehls mit verbesserten Backeigenschaften, insbesondere für hefegetriebene Teige, **dadurch gekennzeichnet, daß** Weizen und ein Anteil Weizen mit Enzymprofil zusammen vermahlen werden. wobei der Weizen mit Enzymprofil durch folgende Schritte gewonnen wird:

- Weizen wird in wäßriger Umgebung geweicht und keimen gelassen, wobei während dieses Vorgangs eine Biomembranen relativ leicht und rasch durchdringende, den Keimvorgang befördernde Substanz, insbesondere Liposome oder Niosome zugesetzt wird
- die Keimphase wird unterbrochen und das gewonnene Weizenmalz getrocknet.

**3.** Verfahren nach Anspruch 1 oder 2, **dadurch gekennzeichnet, daß** das Weizenmehl bzw. der Weizen mit Enzymprofil in einem Anteil von 0.05 bis 10% zugesetzt wird.

**4.** Verfahren nach einem der Ansprüche 1 bis 3, **dadurch gekennzeichnet, daß** Weizenmehl der Type 405 verwendet wird.

**Claims**

**1.** A method for manufacturing a household flour with improved baking properties, in particular for yeast-leavened doughs, wherein to the conventional wheat flour a certain part of flour with an enzyme profile is added, wherein the flour with the enzyme profile is obtained by the following steps:

- wheat is softened in aqueous surroundings and allowed to germinate, wherein during this procedure a substance which relatively easily and quickly penetrates biomembranes and promotes the germination procedure, in particular liposomes or niosomes, is added

- after the interruption of the germination phase after a predetermined time and drying the wheat malt, this is ground.

2. A method for manufacturing a household flour with improved baking properties, in particular for yeast-leavened doughs, wherein wheat and a part component of wheat with an enzyme profile are ground together, wherein the wheat with the enzyme profile is obtained by the following steps:

- wheat is softened in aqueous surroundings and allowed to germinate, wherein during this procedure a substance which relatively easily and quickly penetrates biomembranes and promotes the germination procedure, in particular liposomes or niosomes, is added

- the germination phase is interrupted and the obtained wheat malt is dried.

3. A method according to claim 1 or 2, wherein the wheat flour or the wheat with an enzyme profile is added in a part of 0.05 to 10 %.

4. A method according to one of the claims 1 to 3, wherein wheat flour of the type 405 is used.

**Revendications**

1. Procédé pour la préparation d'une farine de ménage ayant des qualités de cuisson améliorées, en particulier pour les pâtes à pain, **caractérisé en ce que** l'on ajoute à la farine de blé traditionnelle une certaine partie de farine ayant un profil enzymatique, la farine ayant le profil enzymatique étant obtenue par le biais des étapes suivantes :

   on ramollit le blé en environnement aqueux et on le laisse germer, moyennant quoi, pendant ce processus, on ajoute une substance favorisant le processus de germination, pénétrant relativement légèrement et rapidement les biomembranes, en particulier liposomes ou niosomes,
   on le moud, après interruption de la phase de germination au bout d'une durée prédéterminée et le séchage du malt de blé.

2. Procédé pour la préparation d'une farine de ménage ayant des propriétés de cuisson améliorées, en particulier pour les pâtes à pain, **caractérisé en ce que** le blé et une partie de blé ayant un profil enzymatique sont moulus ensemble, le blé ayant un profil enzymatique ayant été obtenu par le biais des étapes suivantes :

   on ramollit le blé en environnement aqueux et on le laisse germer, moyennant quoi, pendant ce processus, on ajoute une substance favorisant le processus de germination, pénétrant relativement légèrement et rapidement les biomembranes, en particulier liposomes ou niosomes,
   la phase de germination est interrompue et le malt de blé obtenu est séché.

3. Procédé selon la revendication 1 ou 2, **caractérisé en ce que** la farine de blé ou le blé ayant un profil enzymatique est ajouté en une partie allant de 0,05 à 10 %.

4. Procédé selon l'une des revendications 1 à 3, **caractérisé en ce que** l'on utilise de la farine de blé de type 405.